# FASCICULE DE BREVET EUROPEEN

(11) **EP 0 649 279 B1**
(45) Date de publication et mention de la délivrance du brevet: **02.04.1997**
(21) Numéro de dépôt: 93914822.7
(22) Date de dépôt: 06.07.1993
(51) Int. Cl.: A01N 65/00, A01N 43/16, A01C 1/06

(54) **UTILISATION DE LA LAMINARINE COMME ACCELERATEUR DE LA GERMINATION DES GRAINES ET DE LA CROISSANCE DES PLANTES**
Verwendung von Laminarin als Beschleuniger der Keimung von Samen und des Wachstumes von Pflanzen
LAMINARIN AS A SEED GERMINATION AND PLANT GROWTH ACCELERATOR

(30) Priorité: 07.07.1992 FR 9208387
(43) Date de publication de la demande: 26.04.1995
(73) Titulaire: LABORATOIRES GOEMAR S.A., 35403 Saint-Malo (FR)
(72) Inventeur: YVIN, Jean-Claude, F-35400 S.-Malo (FR); LEVASSEUR, Florence, F-35400 S.-Malo (FR); AMIN-GENDY, Cyrille, 2, place des Canuts, F-95100 Argenteuil (FR); TRAN THANH, Kiem-Ngoe, F-91190 Gif-sur-Yvette (FR); PATIER, Pascale, F-69005 Lyon (FR); ROCHAS, Cyrille, F-38190 la Combe-de-Lancey (FR); LIENART, Yvette, F-38410 Uriage (FR); CLOAREC, Bernard, F-29250 S.-Pol-de-Léon (FR)
(74) Mandataire: Hubert, Philippe
(86) Numéro de dépôt international: FR9300698
(87) Numéro de publication internationale: WO9400993

(56) Documents cités:
- EP-A- 0 218 770
- EP-A- 0 538 091
- DE-A- 3 735 365
- US-A- 4 125 392
- BIOLOGICAL ABSTRACTS vol. 68, no. 1 , 1979, Philadelphia, PA, US; abstract no. 5199, D.NETZER ET AL. 'beta-(1,3) Glucanase activity and quantity of fungus in relation to Fusarium wilt in resistant and susceptible near-isogenic lines of muskmelon' cité dans la demande
- BIOLOGICAL ABSTRACTS vol. 85, no. 2 , 15 Janvier 1988, Philadelphia, PA, US; abstract no. 20313, F.KUROSAKI ET AL. 'Induction, purification and possible function of chitinase in cultured carrot cells' cité dans la demande
- DATABASE WPI Week 8340, Derwent Publications Ltd., London, GB; AN 83-779898 (40)
- BIOLOGICAL ABSTRACTS vol. 86, no. 4 , 1988, Philadelphia, PA, US; abstract no. 41880, A.BONHOFF ET AL. 'Elicitor-induced accumulation of glyceollin and callose in soybean roots and localized resistance against Phytophora megasperma f. sp. glycinea.' cité dans la demande
- BIOLOGICAL ABSTRACTS vol. 74, no. 8 , 1982, Philadelphia, PA, US; abstract no. 56641, R.B.PEARCE ET AL. 'Chitin and related compounds as elicitors of the lignification response in wounded wheat (Triticum aestivum cultivar Maris
- Huntsma) leaves.' cité dans la demande
- DATABASE WPIL Week 8801, Derwent Publications Ltd., London, GB; AN 88-002663
- DATABASE WPI Week 9113, Derwent Publications Ltd., London, GB; AN 91-090621
- BIOLOGICAL ABSTRACTS vol. 91 Philadelphia, PA, US; abstract no. 123505, G.H. PALMER 'ENZYMIC DEGRADATION OF THE ENDOSPERM CELL WALLS OF GERMINATED SORGHUM'
- BIOLOGICAL ABSTRACTS vol. 89 Philadelphia, PA, US; abstract no. 510384, A.M. CORDER ET AL. 'CARBOHYDRATE-DEGRADING ENZYMES IN GERMINATING WHEAT'
- CHEMICAL ABSTRACTS, vol. 74, no. 5 Columbus, Ohio, US; abstract no. 22224f, G. BLUNDEN ET AL. 'Effect of carbohydrates in seaweed fertilizers'
- BIOLOGICAL ABSTRACTS vol. 95 Philadelphia, PA, US; abstract no. 115659, A.-M. BERNIER ET AL. 'INDUCTION AND SECRETION OF ALPHA AMYLASE 1-3 1-4-BETA GLUCANASE AND 1-3-BETA GLUCANASE ACTIVITIES IN GIBBERELLIC ACID AND CALCIUM DICHLORIDE- TREATED HALF SEEDS AND ALEURONES OF WHEAT.'

## Description

La présente invention a pour objet l'utilisation de la laminarine comme accélérateur de la germination des graines et de la croissance des plantes.

On sait que la laminarine est un polymère de réserve des algues brunes constitué de polysaccharides de structures légèrement différentes selon la nature de l'algue.

D'une façon générale, la laminarine est constituée de 20 à 60 unités D-glucopyranoside réparties selon une chaîne linéaire principale, dans laquelle ces unités sont reliées par des liaisons β(1-3) et des ramifications reliées à cette chaîne principale par des liaisons β(1-6).

Certaines de ces chaînes comportent une unité terminale réductrice constituée par une unité mannitol. On note également l'existence d'unités mannose au sein de cette structure.

La laminarine est généralement extraite d'algues brunes de type Phéophycées et en particulier des Fucales ou des Laminariales.

Diverses méthodes d'extraction peuvent être utilisées pour obtenir la laminarine.

On se reportera par exemple à celle décrite par Black et al Appl. Chem.(1951), Volume 1, pages 505 à 517.

D'une façon plus générale, la laminarine peut être obtenue à partir d'algues brunes par tout procédé d'extraction permettant d'éliminer successivement les constituants autres que la laminarine (polysaccharides pariétaux, sels, etc.).

Ces procédés font notamment appel à des étapes de broyage, de précipitations en milieu acide ou basique, d'ultrafiltrations et de dialyses.

La laminarine est également commercialisée par exemple par la Société Sigma Chimie SARL.

On sait par ailleurs que la laminarine sulfatée possède des propriétés pharmacologiques intéressantes en particulier anti-coagulantes et hypocholestérolémiantes. (K.C. Guven et al., Introduction to Applied Physicology, 1990, pages 67 à 92).

Diverses publications scientifiques décrivent des propriétés élicitrices de la laminarine, suggérant son utilisation pour augmenter les réactions de défense des plantes.

Ainsi, NETZER et al. révèlent qu'une infection par le pathogène S.oxysporum déclenche l'induction de laminarinase (Biological abstracts, Vol. 68, n°1, 1979).

De même, BONHOFF et al. révèlent les propriétés de la laminarine en tant qu'éliciteur de phytoalexine et de callose (Biological abstracts, Vol. 86, n°4, 1988).

Par ailleurs, KUROSAKI et al. (Biological abstracts, Vol. 85, n°2, 1988) et PEARCE (Biological abstracts, Vol. 74, n°8, 1982) confirment les effets éliciteurs de la laminarine, en particulier vis-à-vis de la lignification, tout en précisant que ces effets sont faibles comparés à ceux des éliciteurs connus.

Cet état de la technique pourrait suggérer à l'homme de métier d'utiliser la laminarine pour augmenter les réactions de défense des plantes.

Il a été découvert, et ceci constitue le fondement de la présente invention, que la laminarine présente des propriétés d'éliciteur de l'alpha-amylase à l'origine d'une activité d'accélérateur de la germination des graines et de la croissance des plantes.

Il est rappelé que l'élicitation est un processus qui relève d'une phase de reconnaissance d'un métabolite par la cellule végétale et d'une phase d'expression d'une réponse physiologique générée par un signal. L'éliciteur correspond donc à tout signal capable d'induire chez les plantes des réactions qui lui permettent de s'adapter à son environnement.

Il a été découvert de façon tout à fait inattendue que la laminarine induit l'activation d'enzymes marqueurs du processus de croissance chez les plantes ainsi que la stimulation de l'activité protéolytique des cellules traitées.

Il a ainsi été démontré que la laminarine et des compositions en contenant augmentent le rendement de production de produits agricoles en exerçant une action d'accélération de la croissance des plantes, de l'élongation cellulaire et de la germination des graines.

Ainsi, la présente invention a pour objet l'utilisation de la laminarine comme accélérateur de la germination des graines et de la croissance des plantes.

Selon une caractéristique particulière de cette utilisation selon l'invention, la laminarine est appliquée par voie foliaire ou sur le sol.

Selon une autre caractéristique particulière de l'invention, cette utilisation comprend la préparation d'une composition contenant une quantité efficace de laminarine éventuellement incorporée à un support ou véhicule acceptable en agriculture.

Selon une caractéristique particulière, cette composition se présente sous forme solide, notamment sous forme de poudres ou de granulés ou sous forme liquide, notamment sous forme de solutions aqueuses.

Selon une autre caractéristique particulière, cette composition contient en outre au moins une substance additionnelle choisie parmi les éléments correcteurs de carence, les fongicides, les insecticides, les herbicides et les hormones de croissance, les lipoaminoacides et les bétaines.

En tant qu'herbicide, on peut par exemple utiliser un composé appartenant aux carbamates, aux cyclohexadiones, aux sulfonylurées, aux triazines ou aux uraciles.

En tant que fongicides, on peut par exemple utiliser un composé appartenant aux dithiocarbamates, aux hydantoines, aux imidazoles ou aux triazoles.

Avantageusement, cette composition contient de 0,005 à 50 % en poids de laminarine et de préférence de 1 à 25 % en poids lorsqu'elles se présente sous forme solide et de 0,005 à 10 % en poids de laminarine et de préférence de 0,5 à 5 % en poids lorsqu'elle se présente sous forme liquide.

D'une façon générale, les compositions conformes à l'utilisation selon l'invention seront préparées par mélange de la laminarine extraite sous forme de poudre avec des additifs usuels, par exemple des charges solides et/ou des solvants. On utilisera également des substances tensio-actives, des agents dispersants ou des agents émulsifiants.

En tant que charges solides pour la préparation de poudres mouillables ou de granulés, on peut utiliser par exemple du kaolin ou de l'argile finement divisés.

Lorsqu'elles se présentent sous forme liquide, ces compositions seront de préférence obtenues par dilution de la laminarine dans de l'eau.

On peut également envisager la préparation de compositions pulvérisables à base d'huile ou de concentré émulsifiable, notamment dans le cas de mélange avec des substances additionnelles non solubles dans l'eau.

Les plantes susceptibles d'être traitées avec succès par la laminarine dans le cadre de l'utilisation conforme à l'invention sont par exemple :
les cultures fruitières telles que pommier, poirier, vigne ;
les céréales telles que blé, maïs, riz ;
les oléagineux tels que soja, tournesol, colza ;
les plantes légumières telles que carottes, tomates, choux-fleurs, pomme de terre.

D'une façon générale, la laminarine doit être utilisée à des doses comprises entre 0,005 g et 100 g par litre, dans le cadre du traitement foliaire et entre 1 g et 100 g par quintal dans le cadre du traitement des semences.

La présente invention sera illustrée à l'aide des exemples non-limitatifs suivants :

On donnera tout d'abord aux exemples 1 et 2 deux procédés d'extraction de la laminarine à partir d'une algue brune.

Les spectres RMN des extraits obtenus par la mise en oeuvre des procédés décrits aux exemples 1 et 2 comportent les pics caractéristiques d'une laminarine commerciale.

### EXEMPLE 1 :

### Procédé d'extraction de la laminarine à partir d'une algue brune.

On Soumet 300 g d'algues fraîches de type Laminaria saccharina récoltée au mois d'août, à un cryobroyage (-40°C) suivant le procédé décrit dans le brevet français n°74 35162.

On obtient ainsi un cryobroyat dont le diamètre moyen des particules est compris entre 50 et 100µm et la matière sèche égale à 10-12 %.

A 300 g de ce cryobroyat, on ajoute progressivement 0,9 l d'acide sulfurique 0,3 %. L'extraction est réalisée au bain-marie à une température d'environ 80°C, pendant 1 heure sous agitation.

Cette opération est renouvelée deux fois.

Après neutralisation, on soumet l'extrait obtenu à un traitement à 1a polyvinylpyrrolidone à la dose d'environ 1 % en poids. A cet effet 9 g de polyvinylpyrrolidone (P.V.P.) sont introduits dans un volume de 90 ml d'extrait. On laisse la PVP s'épaissir pendant environ 2 heures. La solution ainsi obtenue est additionnée à environ 0,9 l d'extrait, le mélange étant maintenu sous agitation pendant 30 mn, puis filtré sous vide sur un filtre Whatman GF/A.

Le liquide ainsi obtenu est soumis à une ultrafiltration tangentielle sur une membrane tubulaire carbone-céramique de type "Carbosep" de porosité 50.000 Daltons. L'opération est réalisée en maintenant une pression de 1 bar sur la colonne de filtration.

On obtient ainsi un filtrat présentant un volume d'environ 0,8 litre et de pH 5,5. Puis le filtrat est ensuite soumis à une dialyse sur une membrane en ester de cellulose de type SPECTRA/Por de porosité 500 ou 1000 Daltons. Le dialysat est alors soumis à une lyophilisation et l'on obtient 7 g de poudre sèche correspondant à de la laminarine pure.

### EXEMPLE 2

### Autre procédé d'extraction de la laminarine à partir d'une algue brune.

On soumet 300 g d'algues fraîches de type Ascophyllum nodosum à un broyage, dans un broyeur à lames ou à couteaux de marque STEFAN type VCM5. On obtient ainsi un broyat dont le diamètre des particules est inférieur à 1 mm et la matière sèche égale à 10-12 %. A 300 g de ce broyat, on ajoute 0,9 l d'une solution aqueuse de chlorure de calcium à 2 %. On précipite ainsi notamment les alginates.

La première extraction est réalisée au bain-marie à une température d'environ 60°C, pendant 7 heures sous agitation. Puis le premier extrait est récupéré par filtration et les 300 g de broyat sont soumis à une deuxième extraction dans 0,9 l d'une solution aqueuse de chlorure de calcium à 2 %, dans les mêmes conditions que la première extraction, soit au bain-marie à une température d'environ 60°C, mais cette fois, pendant 1 nuit sous agitation. Puis le deuxième extrait est aussi récupéré par filtration.

Les deux extraits ainsi obtenus sont ensuite réunis et soumis à une diafiltration de façon à éliminer les sels minéraux.

A cet effet, on a utilisé un système Pellicon commercialisé par la Société Millipore, équipé d'une cassette de porosité 1000 Daltons, associé à une pompe Procon également commercialisée par la Société Millipore.

On suit la diminution de la teneur ionique de l'extrait en mesurant régulièrement la résistivité.

La diafiltration est poursuivie jusqu'à ce que la résistivité du rétentat soit d'environ 1000 Ohms.cm.

Le rétentat est ensuite traité sur une colonne de résine échangeuse d'anions, de type échangeur fort tel que Amberlite IRA 400 ou échangeur faible tel que AMBERLITE IR 45.

Deux techniques peuvent être utilisées :
- soit l'utilisation en batch : on dispose directement la résine après régénération par la soude et rinçage à l'eau déminéralisée, dans un récipient contenant le rétentat. On agite pendant 1 heure, on décante et on récupère le filtrat ;
- soit en chromatographie sur colonne : on introduit la résine après régénération par la soude et rinçage à l'eau déminéralisée, dans une colonne de verre de 2-3 cm de diamètre sur une hauteur de 20 cm. On dépose ensuite le filtrat au sommet de la colonne et on le fait pénétrer lentement dans la résine. On rince ensuite la colonne avec de l'eau déminéralisée.

L'éluat est ensuite soumis à une dialyse sur une membrane en ester de cellulose de type Spectra/Por de porosité 500 ou 1000 Daltons. Le dialysat est alors soumis à une lyophilisation et l'on obtient 7 g de poudre sèche correspondant à la laminarine pure.

### EXEMPLE 3

### Mise en évidence des propriétés de la laminarine.

Les propriétés de la laminarine et des compositions en contenant ont été mises en évidence en effectuant les expériences suivantes :

### Expérience n°1

### TEST DE GERMINATION DES GRAINES

On a évalué l'influence de la laminarine sur la germination des semences en utilisant le protocole suivant :

Sans trempage préalable, des semences de carottes, de laitues et d'endives sont mises à germer par lot de 10 dans des boîtes de Pétri de 5 cm de diamètre :
- dans une solution aqueuse (lot témoin)
- dans une solution contenant des substances de croissance (kinétine ou acide indolacétique (AIA) à des concentrations de 10⁻⁶M
- dans une solution contenant la laminarine à différentes concentrations.

Les boîtes de Pétri sont mises dans une enceinte à 25°C à l'obscurité.

Les résultats obtenus après 10 jours sont regroupés dans le tableau suivant :

| **PRODUIT TESTE** | **% DE GERMINATION** | | |
|---|---|---|---|
| | carottes | Laitues | Endives |
| Eau | 35 | 11 | 12 |
| AIA 10⁻⁶ M | 30 | 0 | 15 |
| Kinetine 10⁻⁶ M | 27 | 26 | 12 |
| Laminarine 0,1 µg/ml | 25 | 16 | 15 |
| Laminarine 0,2 µg/ml | 34 | 20 | 13 |
| Laminarine 0,4 µg/ml | 47 | 24 | 17 |
| Laminarine 0,6 µg/ml | 45 | 34 | 20 |
| Laminarine 0,8 µg/ml | 100 | 33 | 10 |
| Laminarine 1 µg/ml | 27 | 32 | 15 |
| Laminarine 2 µg/ml | 41 | 17 | 12 |
| Laminarine 4 µg/ml | 34 | 26 | 9 |
| Laminarine 6 µg/ml | 24 | 30 | 9 |
| Laminarine 8 µg/ml | 35 | 19 | 24 |
| Laminarine 10 µg/ml | 41 | 26 | 13 |

La laminarine présente donc, dans les conditions expérimentales testées une activité optimale aux concentrations de :
- 0,8 µg/ml pour les semences de carottes
- 0,6 ; 0,8 ; 1µg/ml pour les semences de laitue
- 0,4 ; 0,6 et 0,8 µg/ml pour les semences d'endives

Les résultats démontrent donc l'influence de la laminarine sur la germination de différents types de semences.

### Expérience n°2

### Elongation des coléoptiles de blé

Des graines de blé sous mises à germer à 25°C à l'obscurité.

Au bout de 3 jours, les coléoptiles atteignent 2,5 à 3 cm de longueur. Après l'excision des coléoptiles, des segments de 8 mm de longueur sont découpés.

Afin de déterminer si la zone apicale, siège de production endogène d'auxine, va interférer en synergie ou en antagonisme avec la laminarine, deux lots ont été testés, l'un comportant la zone apicale, l'autre n'en comportant pas.

Pour chaque expérience deux lots de 10 fragments de coléoptiles sont mis en présence de 5 ml d'une solution aqueuse de produit à tester (AIA 10⁻⁶M et laminarine à différentes concentrations) dans les boites de Pétri de 5 cm de diamètre.

L'élongation est mesurée après 20 heures d'incubation à l'obscurité à 25°C.

Les résultats obtenus sont regroupés dans le tableau suivant :

| **TRAITEMENT** | **MOYENNE D'ELONGATION** |
|---|---|
| Eau | 9 ± 0,87 |
| AIA 10⁻⁶ M | 11,12 ± 0,29 |
| Laminarine 0,1 µg/ml | 12 ± 0,33 |
| Laminarine 0,2 µg/ml | 12,85 ± 0,99 |
| Laminarine 0,4 µg/ml | 11 ± 0,53 |
| Laminarine 0,6 µg/ml | 10,33 ± 0,86 |
| Laminarine 0,8 µg/ml | 11,83 ± 1,54 |
| Laminarine 1 µg/ml | 11,16 ± 1,67 |
| Laminarine 2 µg/ml | 11,16 ± 1,67 |
| Laminarine 4 µg/ml | 11,25 ± 1 |
| Laminarine 6 µg/ml | 10,42 ± 0,7 |
| Laminarine 8 µg/ml | 11,14 ± 0,97 |
| Laminarine 10 µg/ml | 11,13 ± 1,07 |

La laminarine présente, dans les conditions expérimentales testées, une activité optimale aux concentrations de 0,1 et 0,2 µg/ml.

La laminarine a une activité très favorable sur l'élongation des coléoptiles de blé. Elle agit donc comme régulateur de croissance.

### EXEMPLE 4

### Mise en évidence des propriétés de la laminarine vis-à-vis de l'alpha-amylase.

Les propriétés de la laminarine et des compositions en contenant, vis-à-vis de l'alpha amylase ont été mises en évidence en effectuant l'expérience suivante:

### PROTOCOLE

Des suspensions cellulaires ou de protoplastes de Rubus fructicosus soit 2,4.10⁶ cellules en suspension dans 50 ml de tampon de Citrate de sodium, sont incubées pendant 60 minutes, à température ambiante sous agitation circulaire à 80 rpm en présence ou non des éliciteurs.

Les agents éliciteurs testés correspondent aux compositions contenant la laminarine issues des exemples n°1 et n°2, respectivement dénommées E1 et E2.

Les concentrations de E1 et E2 utilisées pour ce test d'élicitation sont de 0,1g dose par litre.

En fin d'expérience, les cellules ou les protoplastes sont récupérés par centrifugation (500 g 5 minutes à 4°C) et repris par un tampon tris-HCl 50 mM (pH 7,2) enrichi en NaCl (1M). Les cellules récupérées par centrifugation (7300 g, 10 minutes à 4°C) sont lavées par deux fois en présence du tampon citrate de sodium sans saccharose, ni mannitol, avant d'être reprises par du tampon Tris HCl 50 mM (Ph 7,2) enrichi en NaCl (1M).

L'activité alpha-amylase servant à déterminer le potentiel éliciteur des compositions E1, E2 est analysée suivant le protocole suivant :

Un extrait enzymatique est préparé à + 4°C à partir des cellules élicitées ou non. Les cellules reprises par du Tampon Tris HCl 50 mM (pH 7,2) enrichi en NaCl (1 M) (1/5 v/v) sont broyées à l'aide d'un homogénéiseur Polytron ; pendant toute l'opération, l'échantillon est maintenu dans la glace pilée. Le broyat est centrifugé (1200 g, 15 mn à 4°C), le surnageant est concentré par ultrafiltration sur une cellule Amicon équipée d'une membrane PM 10 (seuil de coupure 10.000 Daltons) puis dialysé contre de l'eau distillée à l'aide d'unités Ultrafrec (Millipore) (seuil de coupure 10.000 Da).

L'activité alpha-amylase est dosée après incubation de l'extrait enzymatique (10µg de protéines) à 40°C pendant un temps variable (1 à 6 heures) en présence du substrat (50µg d'amidon soluble) dans 200 µl de tampon acétate de sodium 0,1 M (pH 5,0) ou de tampon phosphate de sodium 0,1 M (pH 7,0) la réaction est arrêtée par chauffage à 100°C pendant 10 minutes.

Le dosage de l'ativité alpha-amylase repose sur la quantification des sucres réducteurs libérés, par la méthode de Somogyi (1952) Des milieux réactionnels sans extrait enzymatique ou renfermant des extraits chauffés à 100°C constituent les blancs.

L'activité enzymatique (A) est exprimée en µmoles d'équivalents glucose libérés par heure de réaction enzymatique et par mg de protéines.

### RESULTATS :

### 1 Expression des résultats

L'activation enzymatique (R) est définie par le rapport de l'activité mesurée dans des cellules ou des protoplastes, élicités sur l'activité mesurée dans des cellules ou des protoplates non traités : l'activité des cellules ou des protoplastes non traités est fixée arbitrairement à 100.

### 2. Résultats : élicitation d'activité alpha-amylase

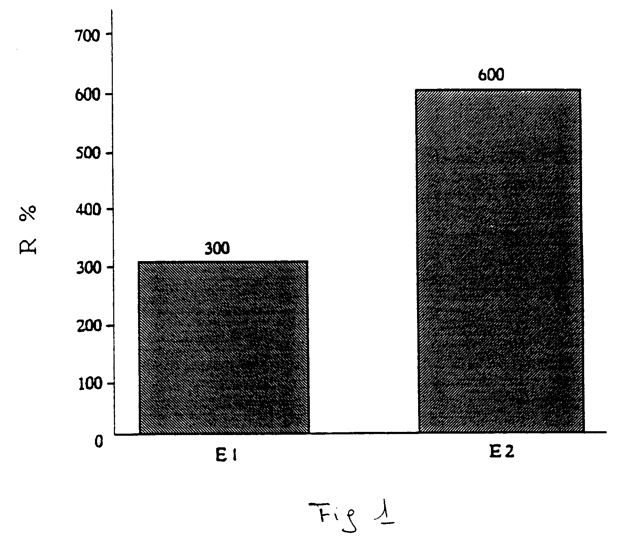

Les résultats obtenus ont été portés sur la figure 1.

Chaque valeur portée sur cette figure résulte du traitement de 3 données expérimentales obtenues au cours d'une expérience d'élicitation.

La composition à base de Laminarine E 1 induit dans les cellules, une activation alpha-amylase : R = 300 % tandis que la composition à base de Laminarine E 2, induit une activation alpha-amylase : R = 600 %.

### CONCLUSIONS

Les résultats obtenus montrent que la composition issue de l'exemple N°2 et dans une moindre mesure celle issue de l'exemple N°1, sont capables de stimuler une activité alpha-amylase, enzyme marqueur du processus de croissance, intervenant notamment lors de phases initiales de la germination.

La laminarine peut donc être utilisée comme agent accélérateur de la germination des graines et de la croissance des plantes

On donnera aux exemples 5 à 8 ci-après différentes compositions à usage agricole contenant de la laminarine issue des exemples 1 et 2.

### EXEMPLE 5

### Composition à usage agricole sous forme d'engrais liquide à base de laminarine issue de l'exemple 1.

La laminarine issue de l'exemple 1, peut être utilisée en solution aqueuse avec un ou plusieurs oligo-éléments correcteurs de carence, par exemple un sel de molybdène et un sel de manganèse.

Après avoir dissous 1 g de laminarine, dans 758 g d'eau, on ajoute 215 g de chlorure de manganèse et 26 g de molybdate de sodium. On laisse sous agitation jusqu'à complète dissolution.

On obtient ainsi une composition avec une teneur en laminarine égale à 0,1%, une teneur en molybdène de 1 % en poids et une teneur en manganèse de 1% en poids. Cette composition peut être utilisée en pulvérisation foliaire en tant que stimulant de croissance des plantes, et correcteur de carences.

### EXEMPLE 6

### Composition agricole à base de laminarine issue de l'exemple 2 en association avec un fongicide.

On dissout 1 g de laminarine dans 699 g d'eau.

On met en suspension dans cette solution, 300 g de Manganil 80 fongicide commercialisé par la Société Bourgeois (N°APV 7000073) à 80 % de matière active soit de manèbe.

Cette suspension à teneur en laminarine de 0,1 % et en manèbe de 24% peut être utilisée en pulvérisation à la surface des feuilles à des doses comprises entre 0,1 et 50 ml/l.

Cette composition exerce une action d'accélération de la croissance des plantes en même temps qu'une protection fongicide, en particulier contre le mildiou de la vigne, des tomates.

### EXEMPLE 7

### Composition à base de laminarine issue de l'exemple 1, utilisée en tant que produit d'enrobage de semence.

La laminarine issue de l'exemple 1 peut être utilisée en solution aqueuse pour le pelliculage d'une semence de type pois protéagineux (variété Ascona).

La semence de pois, traitée ou non phytosanitaire, est pelliculée à l'aide d'un pelliculeur de marque HEGE reposant sur le principe d'une projection à très grande vitesse des substances sur une masse de graines en rotation autour d'un axe qui provoque un déplacement excentré assurant une parfaite intimité entre la graine et les produits de pelliculage.

On prépare ainsi un lot de 500 g de graines de pois, pelliculé à l'aide de 4 ml d'une solution aqueuse de laminarine issue de l'exemple n°1, de teneur égale à 5 % et complétée par un dispersant destiné à améliorer le contact produit/graine.

Cette composition de pelliculage de semences a ainsi une action d'accélération de la germination des graines ainsi que de la levée des plantules.

### EXEMPLE 8

### Composition à base de laminarine issue de l'exemple 2 utilisée dans la préparation de comprimés à usage agricole.

La laminarine sous forme de poudre, issue de l'exemple n°2 peut être utilisée dans la préparation de comprimés destinés à l'arrosage ou la pulvérisation foliaire des plantes d'intérieur.

Une quantité de 0,5 g de laminarine issue de l'exemple n°2 est broyée et mélangée au mortier avec 0,5 g d'un agent déshydratant de type Kaolin. La poudre obtenue est ensuite soumise à une compression dans une machine à comprimer de type alternative, comprenant une matrice fixe et deux poinçons mobiles (un supérieur et un inférieur) dans le sens vertical.

La granulé ou comprimé de 1 g obtenu est ensuite éjecté de la machine et peut être utilisé par dissolution dans l'eau de l'arrosoir ou de pulvérisation.

## Revendications

1. Utilisation de la laminarine comme accélérateur de la germination des graines et de la croissance des plantes.

2. Utilisation selon la revendication 1, caractérisée en ce que la laminarine est appliquée par voie foliaire ou sur le sol.

3. Utilisation selon la revendication 1 ou 2, caractérisée en ce qu'elle comprend la préparation d'une composition contenant une quantité efficace de laminarine éventuellement incorporée à un support ou véhicule acceptable en agriculture.

4. Utilisation selon la revendication 3, caractérisée en ce que cette composition se présente sous forme solide, notamment de poudres ou de granulés, ou sous forme liquide, notamment sous forme de solutions aqueuses.

5. Utilisation selon la revendication 3 ou 4, caractérisée en ce que la composition précitée contient en outre au moins une substance additionnelle choisie parmi les éléments correcteurs de carence, les fongicides, les insecticides, les herbicides et les hormones dc croissance, les lipoaminoacides et les bétaines.

6. Utilisation selon l'une des revendications 3 à 5, caractérisée en ce que la composition précitée se présente sous forme solide et contient de 0,005 à 50 % en poids de laminarine.

7. Utilisation selon l'une des revendications 3 à 5, caractérisée en ce que la composition précitée se présente sous forme liquide et contient de 0,005 à 10 % en poids de laminarine.

8. Utilisation selon la revendication 2, caractérisée en ce que la laminarine est utilisée à des doses comprises entre 0,005 g et 100 g/l, dans le cadre du traitement foliaire.

9. Utilisation selon la revendication 2, caractérisée en ce que la laminarine est utilisée à des doses comprises entre 1 g et 100g/quintal dans le cadre du traitement des semences.

## Claims

1. Use of laminarin as a seed germination and plant growth accelerator.

2. Use according to claim 1, characterized in that the laminarin is applied *via* the leaves or to the soil.

3. Use according to claim 1 or 2, characterized in that it comprises preparing a composition containing an effective amount of laminarin, optionally incorporated with an agriculturally acceptable carrier or vehicle.

4. Use according to claim 3, characterized in that this composition is presented in solid form, especially in the form of powders or granules, or in liquid form, especially in the form of aqueous solutions.

5. Use according to claim 3 or 4, characterized in that the above-mentioned composition also contains at least one additional substance selected from deficiency-correcting elements, fungicides, insecticides, herbicides, growth hormones, lipoamino acids and betaines.

6. Use according to one of claims 3 to 5, characterized in that the above-mentioned composition is presented in solid form and contains from 0.005 to 50% by weight of laminarin.

7. Use according to one of claims 3 to 5, characterized in that the above-mentioned composition is presented in liquid form and contains from 0.005 to 10% by weight of laminarin.

8. Use according to claim 2, characterized in that the laminarin is used in doses of between 0.005 g and 100 g/l, for treating the leaves.

9. Use according to claim 2, characterized in that the laminarin is used in doses of between 1 g and 100 g/100 kg for treating the seeds.

## Patentansprüche

1. Verwendung von Laminarin als Beschleuniger der Keimung von Samen und als Beschleuniger des Pflanzenwachstums.

2. Verwendung nach Anspruch 1, dadurch gekennzeichnet, daß das Laminarin über die Blätter oder den Boden angewandt wird.

3. Verwendung nach Anspruch 1 oder 2, dadurch gekennzeichnet, daß sie die Herstellung einer Zusammensetzung umfaßt, die eine wirksame Menge Laminarin enthält, das ggf. in einen agrochemisch akzeptablen Träger oder ein agrochemisch akzeptabler Hilfsstoff eingebracht ist.

4. Verwendung nach Anspruch 3, dadurch gekennzeichnet, daß die Zusammensetzung in fester Form, insbesondere in Form eines Pulvers oder eines Granulats, oder in flüssiger Form vorliegt, insbesondere in Form einer wässerigen Lösung.

5. Verwendung nach Anspruch 3 oder 4, dadurch gekennzeichnet, daß die Zusammensetzung ferner mindestens eine zusätzliche Substanz enthält, die unter Elementen zur Korrektur von Mangelerscheinungen, Fungiziden, Insektiziden, Herbiziden, Wachstumshormonen, Lipoaminosäuren und Betainen ausgewählt ist.

6. Verwendung nach einem der Ansprüche 3 bis 5, dadurch gekennzeichnet, daß die Zusammensetzung in fester Form vorliegt und 0,005 bis 50 Gew.-% Laminarin enthält.

7. Verwendung nach einem der Ansprüche 3 bis 5, dadurch gekennzeichnet, daß die Zusammensetzung in flüssiger Form vorliegt und 0,005 bis 10 Gew.-% Laminarin enthält.

8. Verwendung nach Anspruch 2, dadurch gekennzeichnet, daß das Laminarin bei Blattbehandlung in Dosen von 0,005 bis 100 g/l eingesetzt wird.

9. Verwendung nach Anspruch 2, dadurch gekennzeichnet, daß das Laminarin bei Saatgutbehandlung in Dosen von 1 bis 100 g/dz eingesetzt wird.
